(19) Europäisches Patentamt
European Patent Office
Office européen des brevets

(11) **EP 3 179 176 B1**

## (12) EUROPEAN PATENT SPECIFICATION

(45) Date of publication and mention
of the grant of the patent:
**13.03.2019 Bulletin 2019/11**

(51) Int Cl.:
**F24S 23/70** *(2018.01)*    **F24S 23/79** *(2018.01)*
**G02B 5/10** *(2006.01)*    *G02B 7/18* *(2006.01)*

(21) Application number: **15382611.0**

(22) Date of filing: **07.12.2015**

(54) **THERMALLY BALANCED SANDWICH-TYPE SOLAR FACE**

THERMISCH AUSGEGLICHENE SANDWICHARTIGE SOLARFLÄCHE

FACE SOLAIRE DE TYPE SANDWICH THERMIQUEMENT ÉQUILIBRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2017 Bulletin 2017/24**

(73) Proprietor: **Lozano Peña, Ricardo
28043 Madrid (ES)**

(72) Inventor: **Lozano Peña, Ricardo
28043 Madrid (ES)**

(74) Representative: **Temiño Ceniceros, Ignacio
Calle Amador de los Rios 1-1°
28010 Madrid (ES)**

(56) References cited:
WO-A1-2012/077771    WO-A1-2013/051999
WO-A1-2014/134114    WO-A2-2014/068452
US-A1- 2015 338 624

**Description**

TECHNICAL FIELD

The present invention relates to sandwich-type solar facets used in heliostats, Fresnel reflectors and parabolic trough collectors which are installed in solar thermal power production plants.
The invention can also be applied to other fields requiring high-performance reflective surface elements, as well as other fields requiring solar light concentration, such as concentration photovoltaic (CPV) elements, water treatment, photochemical reactors, steam generators or processes using solar energy for heating materials.

PRIOR ART

One of the main objectives of many of the various technologies for concentrating and using solar energy is to increase the intensity of concentrated solar radiation, thereby obtaining thermodynamic conversions having higher energy efficiency and output. Among said technologies, those that are particularly relevant are central tower solar concentrator systems, which consist of a solar field conventionally made up of structures with multiple individual mirrors, configuring a large spherical cap or paraboloid, at the focus of which the fixed receiver is located. By means of these systems, the solar radiation striking the reflective elements tracking the movement of the sun (said reflective elements referred to as heliostats) is concentrated and focused on the receiver, located at the top of a tower. The receiver thereby absorbs the received radiation and transfers it, in the form of thermal energy, to a carrier fluid, referred to as heat transfer fluid, to either be used directly in the corresponding thermal or thermodynamic process, or else to be stored as thermal energy, to be used at a later time.
The reflection of the radiation striking the receiving elements largely depends on the material and geometric characteristics of said elements, and on the variation of said characteristics in working conditions or due to the passing of time. Some of the characteristics to be considered in the radiation reflection quality are, *inter alia,* the reflectivity of the reflective elements, their optical quality, curvature, weight, rigidity, impact resistance or dimensions.
Reflectivity is a parameter affecting the percentage amount of incident radiation that is reflected by the reflector. This parameter directly affects the global output of the solar field.
The optical quality of the reflective surface indicates the angular deviation of the radiation reflected in each surface element with respect to its theoretical reflection direction. This parameter directly affects the quality and shape of the reflected radiation beam, being able to generate dispersion of the radiation and an increase in the size or deformation of the solar spot (defined shape when the reflected beam hits a surface) when the value of the angular deviation increases (i.e., optical quality decreases). It must be taken into account that a minor angular error in the inclination of the surface is perceived as a deviation of the reflected beam depending on the distance to the receiver and on the angular error.
The curvature of the reflective element is a very important parameter since radiation will be concentrated at the focal point of the mirror according to geometrical optics. Therefore, it is important to define in a solar field a suitable curvature of the reflectors according to their distance from the reflector.
The weight of the reflective element directly affects the cost of the supporting structure, since said structure must be more rigid in order to support it. However, the design of the reflective element can provide rigidity to the structure, relieving part of the load it receives.
In addition to the mechanical properties of the reflectors discussed above, it is important for the reflectors to have sufficient impact resistance so that the solar field can withstand a hail storm or projectiles entrained by the wind.
Among those reflectors suitable for use in heliostat solar fields, the use of facets is known, said faces being configured as a plurality of reflective subelements, which are arranged successively forming the effective reflective surface of the heliostat. Among the different facet technologies used in the prior art, sandwich-type solar facets are multilayered structures, made up of the superposition of several layers forming a sandwich, used for concentrating solar radiation in solar thermal power plants or in other applications (solar furnaces, etc.). However, there are also other types of facets without a sandwich-type structure, such as those described below:

Patent application BR PI/0616180 (Novatec Biosol AG) consists of a facet formed by applying adhesive in the mold of the mirror to a rigid substrate.

Patent application ES 2326586 (Sener Ingeniería y Sistemas, S.A.) discloses a mirror facet applied by adhesive on a stamped support.

Both proposals are similar and in both of them the low rigidity drastically deteriorates the optical performance with respect to the action of its own weight or the action of the wind, thereby being inadequate for the objective sought.
Patent application EP 2538152 (Kobe Steel, LTD.) proposes a facet with a built-in frame, the curvature of which is generated by mechanically tensing from the rear part thereof with a rod-washer-spring system. This technique has the drawback of the difficulty in regulating the curvature, the variation in curvature when tension is removed from the system and the variation in curvature due to elongation of the rod due to thermal expansion thereof, as well as the heavy weight of the device.

In multilayered sandwich-type facets, the front layer, facing the sun, comprises a mirror reflecting and concentrating radiation in an objective located at a certain distance (in the case of a tower solar thermal power plant, in the central receiver). In addition to the front layer, other layers are added to behind the mirror, primarily for providing rigidity during use.

Rigidity of the facet is usually achieved by means of the use of two rigid outer layers, separated by an intermediate layer having lower density, thereby obtaining a sandwich-type structure having a high moment of inertia and rigidity.

The optical quality of the facets is a determining factor in the output of the solar installation. It is therefore crucial to maintain it regardless of the thermal and mechanical loads applied, in order to achieve a high output in actual operating conditions.

Due to the natural use mode of the facets, one of the faces of said facets is exposed to direct radiation, whereas the other will usually remain in the shade. Due to the nature of the materials forming the facet, part of the incident radiation is absorbed by the front face exposed to the sun, increasing its temperature. By way of example, if the reflectivity of the facet is 94%, the face will absorb, accordingly, 6% of the incident radiation, the absorbed radiation increasing the lower the reflectivity. This thermal increase on one of the faces constantly generates a difference in temperature between both faces, inducing variable deformation and a series of internal stresses which can reduce facet stability and durability.

In addition to the aforementioned effect, the possibility of occasional blocking between heliostats, i.e., one heliostat gets in the path of the beam concentrated by another heliostat, must also be considered. When blocking occurs, the radiation normally strikes the rear part of the facet, and not the entire surface thereof, so the resulting temperature distribution has an important geometrical factor.

Another problem to be considered is the presence of creep due to the effect of continuous stresses or temperature on the facets, for example on those having polymeric components. When creep occurs in a facet, the geometry of said facet is permanently modified. The reduction of residual stresses and of stresses induced by thermal gradients will thus increase the durability of the facets.

Patent application WO 2010/115237 (Wizard Power PTY, LTD.) proposes a sandwich facet formed by a reflective sheet, a metal sheet and an intermediate layer of wood and resin or of plastic polymer, applied when hot on a mold with suitable curvature.

Patent application ES 0473355 (Sener Ingeniería y Sistemas, S.A.) consists of a sandwich facet in which the mirror curved in a mold is attached by means of adhesive to a deformable form board, cutting off the excess and reinforcing the rear part by means of a metal sheet.

Patent application WO 2012/123611 (Rioglass Solar, S.A.) discloses a sandwich facet comprising a reflective layer of mirrored glass, injected polyurethane and a rear metal sheet part, the temperature of which is kept controlled when it is formed in the mold and during cooling so that the geometry thereof does not change.

The facets of the aforementioned patent documents have a front reflective part and a rear metal sheet part, which means that regardless of the optical quality and of the geometrical precision at the design temperature, the difference in properties between both layers generates, as has been verified by finite element modeling (FEM), degradation of the optical quality of about 0.7 mrad per axis (projected on each main axis of the facet), for every 10ºC of difference with respect to the nominal temperature at which the curvature was made. Considering that a typical value of the annual mean thermal amplitude at solar field sites is about 20ºC, the effect of the temperature on designs of this type degrades the mean performance of the facet and can accelerate degradation of the material due to thermal fatigue.

Furthermore, the injection of the polymer can, and usually does, generate local differences in foam densification, which can be transmitted as internal residual stresses in the polymer, and can even generate slight corrugations in the facet.

Patent application WO 2013/135757 (Termopower, S.L.) relates to a facet with a reflective face and a rear face, both faces being configured such that the product of the elastic modulus and of the moment of inertia (designated as E·I, referring to each magnitude, respectively) and the coefficient of expansion of the layers is substantially equal in both layers, both layers being attached by a polyurethane or polycarbonate foam. Nevertheless, although the mechanical equilibrium is duly justified when the load is homogenous on the entire surface, the facet described in said application shows a degraded optical performance in operating conditions, given that the temperature of both faces will not be the same as one of them is subjected to direct irradiation (the front face exposed to the sun) and is heated upon absorbing part of the radiation, whereas the other layer is simply exposed to room temperature.

Finally, patent application ES 8306688 (Glaverbel) propose a sandwich facet with plastic polymer injected between two sheets, preferably of metal, with the prior gluing of a mirror on the front face. The two outer faces are made from the same material, and the difference in expansions between the mirror and the supporting sheet must be compensated for by the adhesive present between the mirror and said sheets.

Document WO 2013/051999 A1 discloses a solar facet comprising a reflective layer on the front face thereof, and an intermediate layer, wherein the reflective layer of the front face is a solar grade mirror.

In summary, the fundamental problems in the designs of sandwich-type facets in the prior art are:

- degraded optical quality in operating conditions due to a design that is not thermally-mechanically balanced for said conditions, including the existence of different temperature between the layers forming the sandwich;
- loss of performance due to aging of the materials, whether it caused by thermal cycling or by the thermal gradients generated by blocking;
- insufficient mechanical performance for large-sized facets;
- residual stresses due to the manufacturing process; and
- unequal densification of the polymer in the intermediate layer.

The present invention is presented as a solution to and improvement of the aforementioned problems of the prior art.

## DISCLOSURE OF THE INVENTION

The object of the invention is a sandwich-type facet having high rigidity, designed such that variations in the optical quality and curvature thereof, due to the influence of the working conditions, are minimized with respect to other known facets. The facet of the invention is preferably formed by two mirror layers, attached by polymer foam having a specific formulation and design, which is deposited in cream phase on one of said mirror layers.

In a preferred embodiment of the invention, the design of the mirror layers of the facet is carried out according to conditions given. On one hand, the reflective layer of the front face and the reflective layer of the rear face have different values of inertia $I_{(XX, YY)}$ with respect to the bending axes XX, YY of the facet, such that:

$$I_{XX\ front} < I_{XX\ rear},$$

$$I_{YY\ front} < I_{YY\ rear}.$$

Likewise, the thickness (e) of the front mirror layer will be less than that of the rear layer, such that $e_{front} < e_{rear}$. This will achieve forming an overall rigid but flexible sandwich that can be subjected a bending in the reflective areas thereof before integrating the components of the reflector system. In turn, the radius of curvature (R) of the front layer will preferably be less than the radius of curvature of the rear layer, complying with $R_{front} < R_{rear}$.

Finally, the thermal expansion coefficients ($\alpha$) of both layers will preferably be substantially equal such that $\alpha_{front} \sim \alpha_{rear}$. In the context of the present invention, the expression "substantially equal", applied to the ratio of different values of magnitudes, must be interpreted as exactly equal, or comprised in a range of variation of $\pm 10\%$.

The physical meaning of the preceding ratios is the equilibrium between internal stresses and deformations of the facet, generated by temperature deviations from the working conditions, and particularly the thermal gradient existing between the faces in working conditions, thereby maximizing the mechanical inertia of the facet for the purpose of improving the rigidity thereof. This achieves i) being able to obtain a reflector having high rigidity which is curved with very small spherical radii, of 15 m; ii) arranging of a rear layer with sufficient rigidity so that it is not affected by local deformations resulting from fixing the reflector on the structure, and iii) being able to control the operating curvature through the manufacturing radius and the increase in curvature occurring when reaching the difference in operating temperature between the faces of the facet.

The increased rigidity allows the facets made according to the present invention to receive part of the load to which the supporting structure is subjected, without affecting their optical quality, thereby reducing the cost of the tracking structure.

In working conditions, one of the faces the facets is oriented such that it receives direct radiation from the sun and reflects it towards the receiver. As indicated, the facet absorbs part of this radiant energy, so its different layers will not be at exactly the same temperature. This temperature largely depends on the reflectivity of the mirror, said temperature being closer to room temperature the greater the reflectivity of the mirror. Due to the higher surface temperature of one of the faces, there will be a given temperature profile inside the facet that has been determined for the different possible working conditions.

Another problem that commonly occurs in the service life of solar tower installations is the occurrence of blocking. In other words, one heliostat gets in the path of the radiation reflected by another heliostat. This causes the facets to receive concentrated radiation in an undetermined area, and, a priori, one which is not prepared to receive said irradiation. The facet object of this invention solves this problem using a mirror as the rear layer. Even though this mirror is not of the same quality as the mirror present in the front part of the facet, it will reflect a large part of the radiation received, so the local temperature increase will be substantially less than that occurring with other materials that are not good materials for reflecting infrared radiation. Furthermore, the mechanical properties of glass will be very similar to those of the front face and will show good performance under compressive loads. Additionally, the use of a mirror as the rear layer of the facet provides additional characteristics, such as a barrier against ultraviolet (UV) radiation that could damage the central polymer foam, at the same time increasing the indirect radiation available in the field, which could be used for other purposes.

In the present invention, the reflective front layer of the facet is a mirror between 0.4 and 2.2 mm thick. In turn, the intermediate layer has a thickness between 15 and 70 mm and the reflective rear layer has a thickness between 2.2 mm and 10 mm.

In a preferred embodiment of the facet object of the invention, the polymer foam attaching the outer faces thereof is of a formulation particularly developed for assuring low water vapor absorption, low weight, high mechanical performance and good resistance to degradation due to UV radiation. Furthermore, this polymer foam is preferably doped with nanoparticles giving it improved mechanical properties with respect to those of the formulation itself. Among those improvements to the mechanical characteristics, the increase in resistance to the occurrence of creep must be pointed out, which factor greatly improves one of the fundamental defects of the first sandwich-type facets with a polyurethane core used in solar applications.

Although it is possible to use nanoparticles having a different size, shape and nature for performing doping, in a preferred embodiment of the invention an optimized load of calcium carbonate, carbon, silica, glass fiber and plastic monomers is selected.

A specific load of reinforcement or doping particles which improve the performance of the facet according to environmental conditions is used. The particles that are used as additives in the manufacturing the polymer foam comprise, as needed, the following materials: single-walled carbon nanotubes (or SWNT, providing rigidity a the facet), silicon dioxide and/or aluminum oxide (to improve resistance to the corrosion), zinc oxide (which acts as a physical barrier against UV radiation), cellulose microtubes (tensile strength), titanium oxide (which acts as a barrier against UV when presented in the form of nanoparticles), zirconium oxide (abrasion resistance and thermal stability), zeolite, collinite and/or clays (acting as a molecular anchor), optionally in conjunction with dispersants such as ammonium citrate or oleic alcohol, to prevent aggregation thereof.

In a preferred embodiment of the invention, the polymer foam forming the intermediate layer of the facet has a particle load, which is variable as needed by design, of up to 10% single-walled carbon nanotubes, up to 15% silicon oxide, up to 5% zinc oxide, up to 20% cellulose, up to 9% titanium oxide microparticles, up to 12% zirconium oxide, up to 14% zeolites, up to 25% clays and up to 18% particles, usually polymeric dendrimers.

Additionally, the manufacturing process for the facet object of the invention uses a deposition process for the reacting mixture which will form the polymer foam, and said process is performed such that the polymeric cream layer has an approximately constant thickness with respect to the surface on which it is supported, so densification thereof is homogenous and transferring local stresses and deformations to the reflective surface caused by uneven foaming is thereby avoided.

In summary, the sandwich-type solar facet object of the invention minimizes the aforementioned problems in the prior art, the basis of its design and configuration being optimization of the optical quality and curvature of the facet in the working conditions of each site.

DESCRIPTION OF THE DRAWINGS

The present specification is complemented with a set of non-limiting, illustrative drawings of the preferred embodiment with respect to other embodiments of the invention.

Figure 1 depicts an exploded perspective view of the layers of the facet object of the invention.

Figures 2 and 3 show a planer facet and a curved facet, respectively.

Figure 4 shows an extreme case of a curved facet, where maximum and minimum distances between front and rear faces are indicated.

The elements shown in the drawings are listed below:

(1) Reflective surface, mirror.
(2) Polymer foam core.
(3) Rear support of the facet.

DETAILED DISCLOSURE OF THE INVENTION

The detailed disclosure of the invention is provided below in reference to a preferred embodiment thereof. As previously indicated, the facet of the invention is a sandwich-type facet having high rigidity, designed such that variations in the optical quality and curvature thereof due to the influence of the working conditions are minimized. The facet is formed by two mirror layers (1, 3), said layers being the outer layers of the facet on the front and rear faces thereof. In the present invention, the front layer (1) (which is facing the tower collector) is a solar grade mirror (the optical performance of which is specifically adapted for being applied in a solar field), whereas the rear layer (3) is a standard commercial mirror. Both layers (1, 3) are attached by polymer foam (2) having a specific formulation and design, preferably being deposited on one of the mirror layers (1, 3) in cream phase.

A preferred embodiment of the present invention comprises a specific design of the different reflective layers of the front face (1) and rear face (3) of the facet, complying with two or more of the following equations:

$$I_{XX \; front} < I_{XX \; rear},$$

$$I_{YY \; front} < I_{YY \; rear},$$

$$R_{front} < R_{rear},$$

$$\alpha_{front} \sim \alpha_{rear}.$$

Meeting the requirements imposed by these equations provides the facet with equilibrium with respect to internal stresses and deformations thereof, generated by temperature deviations from the working conditions, and particularly by the thermal gradient existing between the faces in working conditions. Mechanical inertia of the facet is furthermore maximized, improving rigidity thereof. The external dimensions of the facet, as well as the thicknesses of the different layers (1, 2, 3) and the densification and particle load of the polymer foam (2) of the central core, are defined according to the environmental and working conditions at the site, the design meeting the equation described above for defining the dimensions and mechanical characteristics. Furthermore, increased rigidity of the facet also allows the assembly of facets forming the effective surface of the heliostat to receive part of the mechanical loads to which the supporting structure of said heliostat is subjected, without affecting their optical quality, thereby reducing the cost of the tracking structure.

Likewise, the thickness of the front layer ($e_{front}$) of the facet is preferably adjusted according to the focal working distance from the reflector, taking the following ratio into account:

$$e_{front} = \sqrt[3]{\frac{48 \cdot q \cdot a^4 \cdot \left(1 - \vartheta^2\right)}{\pi^6 \cdot E_{front} \cdot \left[2 \cdot D_{Focal} - \left(4 \cdot D_{Focal}^2 - \frac{a^2}{4}\right)^{0.5}\right]}}$$

where q is a load parameter (N/m$^2$) taking values within the adjustment range defined by:

$$\gamma \cdot e_{front} \leq q \leq 0.5 \cdot q_{Rupture}$$

where $\gamma$ is the specific weight (N/m$^3$) of the reflective front layer of the facet, and $q_{rupture}$ is the distributed rupture load (N/m$^2$) on the front layer. Likewise, a is the characteristic length (m) of the facet, $E_{front}$ is Young's modulus (N/m$^2$) of the front layer, $D_{focal}$ is the design focal distance (m) of the facet, and $\vartheta$ is Poisson's ratio of the reflective front layer.

The characteristic length (a) of the facet is the largest distance in the facet parallel to the axis along which is evaluated the curvature, i.e., the height of the facet for the curvature of the long side and the width thereof for the curvature of the smaller side.

The focal distance of the facet is the distance between the surface thereof and the focal point in space in which it concentrates the reflected rays striking it parallel to the axis thereof (paraxial). This distance corresponds to half the radius of curvature.

Furthermore, the radius of curvature ($R_{Focal}$) of the reflective front face is corrected during the manufacturing process with respect to the design radius, considering the rigidity of the upper layer and the tangential forces thereon during average operating conditions. The radius of curvature ($R_{Focal}$) is thereby modified by means of adding a radius of curvature correction corresponding to the variation in radius occurring during operation ($\Delta R_{Operation}$), obtaining the radius of curvature of the front face of the facet during manufacture ($R_{Manufacture}$).

$$R_{Manufacture} = R_{Focal} + \Delta R_{Operation}.$$

The variation in radius occurring during operation ($\Delta R_{Operation}$) is evaluated according to the operating conditions of the facet at each site. To that end, the maximum sag induced on the front face is related with the equation of a sphere in the spherical cap corresponding to the dimension of the facet with the help of the Pythagorean theorem and the Cartesian equation of a sphere. Induced maximum sag is evaluated by means of solving a system of equations corresponding to plate deformation by applying the Mindlin-Reissner Theory.

Equations such as those shown below are thereby obtained, which equations show the tangential force the front face of the facet withstands during manufacture thereof and the maximum sag of a plate subjected to a distributed load, respectively.

$$F_{Tg} = \frac{E_{core} \cdot \alpha_{front} \cdot \Delta T \cdot a \cdot (h_{max} + h_{min})}{4}$$

$$(h_{max} - h_{min}) = \frac{12 \cdot (1 - \vartheta^2)}{E \cdot e^3} \frac{16 \cdot q \cdot a^4}{\pi^6} \frac{\lambda^2}{(1 + \lambda^2)^2}$$

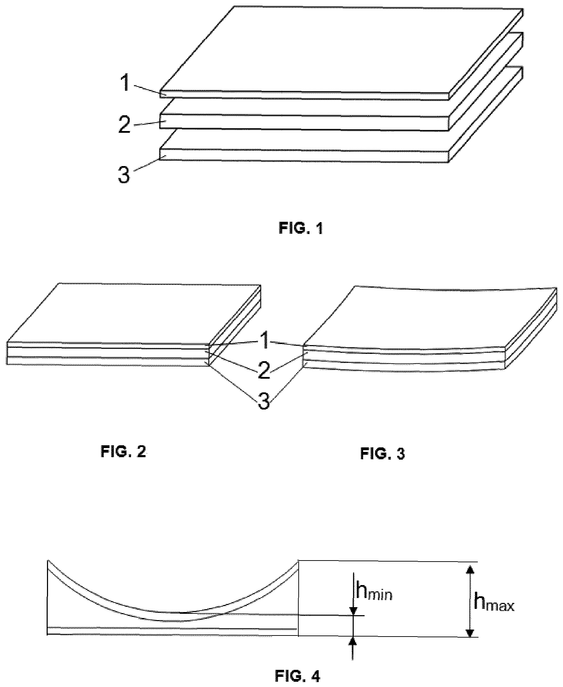

where $F_{Tg}$ is the tangential force on the front face of the facet, A is the ratio between the larger and smaller sides of the facet, $E_{core}$ is the elastic modulus of the polymeric core attaching both faces of the facet, $\alpha_{front}$ is the coefficient of expansion of the front face, $\Delta T$ is the difference in temperature between the faces of the facet and $h_{max}$ and $h_{min}$ are the maximum and minimum distances between the front and rear faces of the facet, respectively (see Figure 4).

In working conditions, the facets are arranged such that their front face (1) receives direct radiation from the sun and reflects it towards the tower receiver. As indicated, the facet absorbs part of this radiant energy, so its different layers will not be at exactly the same temperature. This temperature largely depends on the reflectivity of the mirror, said temperature being closer to room temperature the greater the reflectivity of the mirror. Due to the higher surface temperature of one of the faces, there will be a given temperature profile inside the facet that has been determined for the different possible working conditions.

Another problem that commonly occurs in the service life of solar tower installations is the occurrence of blocking. In other words, one heliostat gets in the path of the radiation reflected by another heliostat. This causes the facets to receive concentrated radiation in an undetermined area, and, a priori, one which is not prepared to receive said irradiation. As mentioned in preceding sections, the facet object of this invention solves this problem using a mirror as the rear layer (3). Even though said mirror does not have to have the same quality as the mirror present in the front layer (1) of the facet, the mirror of the rear layer will reflect a large part of the radiation received, so the local temperature increase will be substantially less than that occurring with other materials that are not good materials for reflecting infrared radiation. Furthermore, the mechanical properties of the glass will be very similar to those of the front face and will therefore show improved performance under compressive loads. Additionally, the use of a mirror as the rear layer (3) of the facet provides additional characteristics, such as a barrier against ultraviolet (UV) radiation, preventing said radiation from degrading the central polymer foam, and furthermore increasing the indirect radiation available in the field, allowing it to be used for other purposes. Instead of a mirror, any other reflective material reflective could be used as the rear layer (3), deposited on or fixed to it.

The thickness of the rear layer (3) is between 2.2 and 10 mm, the thickness of the intermediate layer (2) between 15 and 70 mm, and the thickness of the front layer (1) between 0.4 and 2.2 mm. More preferably, the thickness of the intermediate layer (2) is between 25 and 55 mm and the thickness of the front layer (1) between 0.9 and 2.2 mm, which thicknesses are shown to be effective especially in conventional facet dimensions, such as approximately 2000 mm x 1600 mm or 3000 mm x 1600 mm.

Another one of the specific features of the facet object of the invention is that the polymer foam (2) attaching the outer faces is of a formulation particularly developed for assuring low water vapor absorption, low weight, high mechanical performance and good resistance to degradation due to UV radiation. Furthermore, this polymer foam is preferably doped with nanoparticles giving it improved mechanical properties with respect to those of the formulation itself. Among those improvements to the mechanical characteristics, the increase in resistance to the occurrence of creep must be pointed out, which factor greatly improves one of the fundamental defects of the first sandwich-type facets with a polyurethane core that were tested in solar applications.

Degradation of this polymer foam caused by UV radiation is superficial, and it successfully surpasses UV radiation testing for a 30-year service life, so the intermediate layer (3) does not require UV barrier or protection on the perimeter of the facet, though there is no impediment to the painting or protection thereof by means of a physical barrier such as a frame, for example, if the intention is to prevent any type of degradation.

Use of nanoparticles having a different size, shape and nature for performing doping has been tested. An optimized mixture of calcium carbonate, carbon, silica, glass fiber and plastic monomers is selected.

The doping used is defined as a composition comprising one or several types of particles, with one of the main dimensions thereof being between 10 and 250 nm, said particles being suspended in the reagent mixture, referred to as cream, which reacts until forming the polymer foam. Said types of particles can be: single-walled carbon nanotubes (SWNT), silicon dioxide, aluminum oxide, zinc oxide, cellulose microtubes, titanium oxide, zirconium oxide, zeolite, clays and polymeric particles, in conjunction with dispersants such as ammonium citrate or oleic alcohol to prevent aggregation thereof. The nanoparticles can be added in the form of fiber, spherical or spheroidal particle or dendrimers, according to the desired function and the nature of the additive.

The preferred nanoparticle load in the facet object of the invention is, as needed in each particular case, the following:

- up to 10% swnt;
- up to 15% silicon oxide;
- up to 5% zinc oxide;
- up to 20% cellulose;
- up to 9% titanium oxide microparticles;
- up to 12% zirconium oxide;
- up to 14% zeolites;
- up to 25% clays;
- up to 18% particles; usually polymeric dendrimers.

The composition and material of the dispersants used vary according to the nanoparticle load and mixture used.

Additionally, the manufacturing process for the facet object of the invention uses a deposition process for the reacting mixture which will form the polymer foam, such that the polymeric cream layer has an approximately constant thickness with respect to the surface on which it is supported, so densification thereof is homogenous and transferring local stresses and deformations to the reflective surface caused by uneven foaming is thereby avoided. Once the reacting mixture is deposited, the forming mold is closed to induce the desired polymer foam densification, which can be adjusted according to the amount of mixture added for the existing intermediate layer volume.

In summary, the sandwich-type solar facet object of the invention minimizes the aforementioned problems in the prior art, the base of its design and configuration being optimization of the optical quality and curvature of the facet in the working conditions of each site based on calculating, using said formula, the dimensions and characteristics of each of the parts thereof.

**Claims**

1.  A sandwich-type solar facet, **characterized in that** it comprises reflective layers on the front face (1) and rear face (3) thereof, and an intermediate layer (2) of polymer foam; wherein:

    - the reflective layer of the front face (1) is a solar grade mirror, whose optical performance is adapted for its application to a solar field, with thickness value between 0.4 mm and 2.2 mm;
    - the reflective layer of the rear face (3) is a non-solar grade mirror, with thickness value between 2.2 mm and 10 mm; and
    - the intermediate layer (2) has a thickness between 15 and 70 mm;

    wherein the thickness (e) of the reflective layer of the front face (1) is less than that of the reflective layer of the rear face (3), such that $e_{front} < e_{rear}$.

2. The facet according to the preceding claim, wherein the reflective layers of the front face (1) and rear face (3) have different values of inertia $I_{(XX, YY)}$ with respect to the bending axes XX, YY of the facet, such that $I_{XX\ front} < I_{XX\ rear}$, $I_{YY\ front} < I_{YY\ rear}$.

3. The facet according to any of the preceding claims, wherein at least one of the following ratios is complied with:

- the radius of curvature (R) of the reflective layer of the front face (1) is less than that of the reflective layer of the rear face (3), such that $R_{front} < R_{rear}$;
- the thermal expansion coefficients ($\alpha$) of the reflective layers of the front face (1) and of the rear face (3) are substantially equal, such that $\alpha_{front} \sim \alpha_{rear}$.

4. The facet according to any of the preceding claims, wherein the thickness of the reflective layer of the front face ($e_{front}$) complies with the following ratio:

$$e_{front} = \sqrt[3]{\frac{48 \cdot q \cdot a^4 \cdot (1 - \vartheta^2)}{\pi^6 \cdot E_{front} \cdot \left[2 \cdot D_{Focal} - \left(4 \cdot D_{Focal}^2 - \frac{a^2}{4}\right)^{0.5}\right]}}$$

wherein q is a load parameter taking values within the adjustment range defined by:

$$\gamma \cdot e_{front} \leq q \leq 0.5 \cdot q_{Rupture}$$

wherein $\gamma$ is the specific weight of the reflective layer of the front face of the facet, $q_{rupture}$ is the distributed rupture load on the front layer, a is the characteristic length of the facet, $I_{front}$ is Young's modulus of the front layer, $D_{focal}$ is the design focal distance of the facet and $\theta$ is Poisson's ratio of the reflective front layer.

5. Thet facet according to any of the preceding claims, wherein its manufacturing curvature ($R_{Manufacture}$) is substantially equal to the radius of curvature ($R_{Focal}$) of the reflective front face, plus a correction of the radius of curvature corresponding to the variation in radius occurring during operation ($\Delta R_{Operation}$), such that $R_{Manufacture} = R_{Focal} + \Delta R_{Operation}$.

6. The facet according to any of the preceding claims, wherein the intermediate layer (2) comprises a polymer foam of polyurethane precursors.

7. The facet according to any of the preceding claims, wherein the polymer foam forming the intermediate layer (2) comprises doping agents formed by one or several types of particles, at least one of the main dimensions thereof being comprised between 10 and 250 nm, and said types of particles comprising one or more of the following compounds: calcium carbonate, carbon, silica, glass fiber and/or plastic monomers.

8. The facet according to the preceding claim, wherein the polymer foam comprises one or more of the following additives: single-walled carbon nanotubes (SWNT), silicon dioxide, aluminum oxide, zinc oxide, cellulose microtubes, titanium oxide, zirconium oxide, zeolite, or polymeric particles in conjunction with one or more dispersants.

9. The facet according to the preceding claim, wherein the dispersants comprise ammonium citrate or oleic alcohol.

10. The facet according to any of the preceding claims, wherein the polymer foam forming the intermediate layer (2) has a particle load of up to 10% single-walled carbon nanotubes, up to 15% silicon oxide, up to 5% zinc oxide, up to 20% cellulose, up to 9% titanium oxide microparticles, up to 12% zirconium oxide, up to 14% zeolites, up to 25% clays and up to 18% polymeric particles.

11. The facet according to the preceding claim, wherein the polymeric particles are dendrimers, fibers, spherical or spheroidal particles.

**12.** Use of a facet according to any of the preceding claims for reducing the loss of performance due to thermal gradients generated by blocking of nearby heliostats in a heliostat field.

**Patentansprüche**

**1.** Solarfacette vom Sandwich-Typ, **dadurch gekennzeichnet, dass** sie reflektierende Schichten auf der Vorderseite (1) und der Rückseite (3) davon und eine Zwischenschicht (2) aus Polymerschaum umfasst; wobei:

- die reflektierende Schicht der Vorderseite (1) ein Solarspiegel ist, dessen optische Leistung für seine Anwendung auf ein Solarfeld angepasst ist, mit einem Dickenwert zwischen 0,4 mm und 2,2 mm;
- die reflektierende Schicht der Rückseite (3) ein Spiegel ohne Solarqualität mit einem Dickenwert zwischen 2,2 mm und 10 mm ist; und
- die Zwischenschicht (2) eine Dicke zwischen 15 und 70 mm aufweist;

wobei die Dicke (e) der reflektierenden Schicht der Vorderseite (1) geringer ist als die der reflektierenden Schicht der Rückseite (3), so dass $e_{front} < e_{rear}$.

**2.** Facette nach dem vorhergehenden Anspruch, wobei die reflektierenden Schichten der Vorderseite (1) und der Rückseite (3) unterschiedliche Trägheitswerte $I_{(XX,YY)}$ in Bezug auf die Biegeachsen XX, YY der Facette aufweisen, so dass $I_{XXfront} < I_{XXrear}$, $I_{YYfront} < I_{YYrear}$.

**3.** Facette nach einem der vorhergehenden Ansprüche, wobei mindestens eines der folgenden Verhältnisse eingehalten wird:

- der Krümmungsradius (R) der reflektierenden Schicht der Vorderseite (1) ist kleiner als der der reflektierenden Schicht der Rückseite (3), so dass $R_{front} < R_{rear}$;
- die Wärmeausdehnungskoeffizienten ($\alpha$) der reflektierenden Schichten der Vorderseite (1) und der Rückseite (3) sind im Wesentlichen gleich, so dass $\alpha_{front} \sim \alpha_{rear}$.

**4.** Facette nach einem der vorhergehenden Ansprüche, wobei die Dicke der reflektierenden Schicht der Vorderseite ($e_{front}$) dem folgenden Verhältnis entspricht:

$$e_{front} = \sqrt[3]{\frac{48 \cdot q \cdot a^4 \cdot (1-\vartheta^2)}{\pi^6 \cdot E_{front} \cdot [2 \cdot D_{Focal} - (4 \cdot D_{Focal}^2 - \frac{a^2}{4})^{0,5}}}$$

wobei q ein Lastparameter ist, der Werte innerhalb des Einstellbereichs annimmt, der durch Folgendes definiert ist:

$$\gamma \cdot e_{front} \leq q \leq 0,5 \cdot q_{Rupture}$$

wobei $\gamma$ das spezifische Gewicht der reflektierenden Schicht der Vorderseite der Facette ist, $q_{rupture}$ die verteilte Bruchlast auf der Vorderseite ist, a die charakteristische Länge der Facette ist, $I_{front}$ der Young-Modul der Vorderseite ist, $D_{focal}$ die Designbrennweite der Facette ist und $\theta$ das Poisson-Verhältnis der reflektierenden Vorderseite ist.

**5.** Facette nach einem der vorhergehenden Ansprüche, wobei ihre Herstellungskrümmung ($R_{Manufacture}$) im Wesentlichen gleich dem Krümmungsradius ($R_{Focal}$) der reflektierenden Vorderseite ist, plus eine Korrektur des Krümmungsradius entsprechend der während des Betriebs auftretenden Variation des Radius ($\Delta R_{operation}$), so dass $R_{Manufacture} = R_{Focal} + \Delta R_{operation}$.

**6.** Facette nach einem der vorhergehenden Ansprüche, wobei die Zwischenschicht (2) einen Polymerschaum aus Polyurethan-Vorläufern umfasst.

**7.** Facette nach einem der vorhergehenden Ansprüche, wobei der die Zwischenschicht (2) bildende Polymerschaum Dotierstoffe umfasst, die aus einer oder mehreren Arten von Partikeln gebildet sind, wobei mindestens eine der Hauptabmessungen davon zwischen 10 und 250 nm liegt, und wobei die Arten von Partikeln eine oder mehrere der folgenden Verbindungen umfassen: Calciumcarbonat, Kohlenstoff, Siliziumdioxid, Glasfaser und/oder Kunststoffmonomere.

8. Facette nach dem vorhergehenden Anspruch, wobei der Polymerschaum eines oder mehrere der folgenden Additive umfasst: einwandige Kohlenstoff-Nanoröhrchen (SWNT), Siliziumdioxid, Aluminiumoxid, Zinkoxid, Cellulose-Mikroröhrchen, Titanoxid, Zirkonoxid, Zeolith oder Polymerpartikel in Verbindung mit einem oder mehreren Dispersionsmitteln.

9. Facette nach dem vorhergehenden Anspruch, wobei die Dispersionsmittel Ammoniumcitrat oder Ölsäurealkohol umfassen.

10. Facette nach einem der vorhergehenden Ansprüche, wobei der die Zwischenschicht (2) bildende Polymerschaum eine Partikelbelastung von bis zu 10 % einwandigen Kohlenstoff-Nanoröhrchen, bis zu 15 % Siliziumoxid, bis zu 5 % Zinkoxid, bis zu 20 % Cellulose, bis zu 9 % Titanoxid-Mikropartikeln, bis zu 12 % Zirkonoxid, bis zu 14 % Zeolithe, bis zu 25 % Tone und bis zu 18 % Polymerpartikel aufweist.

11. Facette nach dem vorhergehenden Anspruch, wobei die Polymerpartikel Dendrimere, Fasern, kugelförmige oder kugelähnliche Partikel sind.

12. Verwendung einer Facette nach einem der vorhergehenden Ansprüche zur Reduzierung des Leistungsverlustes aufgrund von Temperaturgradienten, die durch Blockierung von nahegelegenen Heliostaten in einem Heliostatenfeld erzeugt werden.

**Revendications**

1. Facette solaire de type sandwich, **caractérisée en ce qu'**elle comprend des couches réfléchissantes sur la face avant (1) et la face arrière (3) de celle-ci, et une couche intermédiaire (2) de mousse de polymère ; dans laquelle :

    - la couche réfléchissante de la face avant (1) est un miroir de qualité solaire, dont la performance optique est adaptée pour son application à un champ solaire, avec la valeur d'épaisseur entre 0,4 mm et 2,2 mm ;
    - la couche réfléchissante de la face arrière (3) est un miroir de qualité non-solaire, avec la valeur d'épaisseur entre 2,2 mm et 10 mm ; et
    - la couche intermédiaire (2) a une épaisseur entre 15 et 70 mm ; dans laquelle l'épaisseur (e) de la couche réfléchissante de la face avant (1) est inférieure à celle de la couche réfléchissante de la face arrière (3), de sorte que $e_{avant} < e_{arrière}$.

2. Facette selon la revendication précédente, dans laquelle les couches réfléchissantes de la face avant (1) et de la face arrière (3) ont des valeurs différentes d'inertie $I_{(XX,YY)}$ par rapport aux axes de flexion XX, YY de la facette, de sorte que $I_{XXavant} < I_{XXarrière}$, $I_{YYavant} < I_{YYarrière}$.

3. Facette selon l'une quelconque des revendications précédentes, dans laquelle au moins l'un des ratios suivants se conforme à :

    - le rayon de courbure (R) de la couche réfléchissante de la face avant (1) est inférieur à celui de la couche réfléchissante de la face arrière (3), de sorte que $R_{avant} < R_{arrière}$ ;
    - les coefficients d'expansion thermique ($\alpha$) des couches réfléchissantes de la face avant (1) et de la face arrière (3) sont sensiblement égaux, de sorte que $\alpha_{avant} \sim \alpha_{arrière}$.

4. Facette selon l'une quelconque des revendications précédentes, dans laquelle l'épaisseur de la couche réfléchissante de la face avant ($e_{avant}$) se conforme au ratio suivant :

$$e_{avant} = \sqrt[3]{\frac{48 \cdot q \cdot a^4 \cdot (1 - \vartheta^2)}{\pi^6 \cdot E_{avant} \cdot [2 \cdot D_{Focale} - (4 \cdot D_{Focale}^2 - \frac{a^2}{4})^{0,5}}}$$

dans laquelle q est un paramètre de charge prenant des valeurs dans la plage de réglage définie par :

$$\gamma \cdot e_{avant} \leq q \leq 0{,}5 \cdot q_{Rupture}$$

dans laquelle $\gamma$ est le poids spécifique de la couche réfléchissante de la face avant de la facette, $q_{rupture}$ est la charge de rupture répartie sur la couche avant, a est la longueur caractéristique de la facette, $I_{avant}$ est le modèle de Young de la couche avant, $D_{focale}$ est la distance focale de conception de la facette et $\theta$ est le ratio de Poisson de la couche avant réfléchissante.

5. Facette selon l'une quelconque des revendications précédentes, dans laquelle sa courbure de fabrication ($R_{Fabrication}$) est sensiblement égale au rayon de courbure ($R_{Focal}$) de la face avant réfléchissante, plus une correction du rayon de courbure correspondant à la variation en rayon se produisant pendant l'opération ($\Delta R_{opération}$), de sorte que $R_{Fabrication} = R_{Focal} + \Delta R_{Opération}$.

6. Facette selon l'une quelconque des revendications précédentes, dans laquelle la couche intermédiaire (2) comprend une mousse de polymère de précurseurs de polyuréthane.

7. Facette selon l'une quelconque des revendications précédentes, dans laquelle la mousse de polymère formant la couche intermédiaire (2) comprend des agents dopants formés par un ou plusieurs types de particules, au moins l'une des dimensions principales de celle-ci étant comprise entre 10 et 250 nm, et lesdits types de particules comprenant un ou plusieurs des composants suivants : carbonate de calcium, carbone, silice, fibre de verre et/ou monomères de plastique.

8. Facette selon la revendication précédente, dans laquelle la mousse de polymère comprend un ou plusieurs des additifs suivants : nanotubes de carbone à simple paroi (ou SWNT), dioxyde de silicone, oxyde d'aluminium, oxyde de zinc, microtubes de cellulose, oxyde de titane, oxyde de zirconium, zéolite, ou particules polymériques conjointement à un ou plusieurs dispersants.

9. Facette selon la revendication précédente, dans laquelle les dispersants comprennent du citrate d'ammonium ou de l'alcool oléique.

10. Facette selon l'une quelconque des revendications précédentes, dans laquelle la mousse de polymère formant la couche intermédiaire (2) a une charge de particules jusqu'à 10 % de nanotubes de carbone à simple paroi, jusqu'à 15 % d'oxyde de silicone, jusqu'à 5 % d'oxyde de zinc, jusqu'à 20 % de cellulose, jusqu'à 9 % de microparticules d'oxyde de titane, jusqu'à 12 % d'oxyde de zirconium, jusqu'à 14 % de zéolites, jusqu'à 25 % d'argile et jusqu'à 18 % de particules polymériques.

11. Facette selon la revendication précédente, dans laquelle les particules polymériques sont des dendrimères, des fibres, des particules sphériques ou sphéroïdales.

12. Utilisation d'une facette selon l'une quelconque des revendications précédentes pour réduire la perte de performance due aux gradients thermiques générés par le blocage d'héliostats proches dans un champ d'héliostat.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BR PI0616180
- ES 2326586
- EP 2538152 A
- WO 2010115237 A
- ES 0473355
- WO 2012123611 A
- WO 2013135757 A
- ES 8306688
- WO 2013051999 A1